# EUROPÄISCHE PATENTSCHRIFT

(11) **EP 0 788 911 B1**
(45) Veröffentlichungstag und Bekanntmachung des Hinweises auf die Patenterteilung: **24.01.2001**
(21) Anmeldenummer: 96115702.1
(22) Anmeldetag: 01.10.1996
(51) Int. Cl.: B60J 5/04

(54) **Funktionsmodul für Kraftwagentüren**
Structural module for vehicle door
Module structurel pour porte de véhicule

(30) Priorität: 11.10.1995 DE 19537818; 10.01.1996 DE 19600583
(43) Veröffentlichungstag der Anmeldung: 13.08.1997
(73) Patentinhaber: ED. Scharwächter GmbH, 42855 Remscheid (DE)
(72) Erfinder: Klüting, Bernd-Alfred, D-42477 Radevormwald (DE)
(74) Vertreter: Sparing, Rolf Klaus

(56) Entgegenhaltungen:
- EP-A- 0 267 152
- EP-A- 0 291 107
- EP-A- 0 648 662
- DE-A- 4 139 305

## Beschreibung

Die Erfindung betrifft eine Kraftwagentür nach dem Oberbegriff des Anspruchs 1.

DE-A-4008111 beschreibt eine Kraftwagentür, bei der der tragende Bereich der Türe ein etwa senkrechtes vorderes und ein gleichfalls etwa senkrechtes hinteres Rahmenteil sowie je ein oberes und je ein unteres, die beiden im wesentlichen senkrecht ausgerichteten Rahmenteile miteinander verbindende weitere Rahmenteile umfaßt. Im einzelnen ist bei einer solchen Ausbildung eines tragenden Türrahmens dann weiter vorgesehen, daß sowohl das vordere als auch das hintere Rahmenteil als Gußteile mit integrierter Führungsschiene für eine vertikal verschiebbare Türfensterscheibe ausgestattet sind. Durch eine solche Gestaltungsweise der Türe bzw. eines tragenden Rahmens einer Fahrzeugtüre kann zwar gegenüber der traditionellen Bauweise von Fahrzeugtüren aus Blechpressteilen eine gewisse Vereinfachung hinsichtlich der Verminderung der Anzahl der für den Aufbau eines stabilen und zudem mit einer im wesentlichen vertikal gerichteten Fensterführung ausgestatten Türkörpers erzielt werden, jedoch muß dabei die Ausbildung wenigstens zweier Rahmenteile der Türe als Gußformteile in Kauf genommen werden, wobei diese Gußteile zudem lediglich als Teile eines in einen durch Blechpreßteile gebildeten Türkörpers einzufügenden Türrahmens ausgestaltet sind. Die Herstellung eines solchen Türrahmens erfordert zudem einen beträchtlichen Aufwand selbst dann, wenn in Verbindung mit einer Ausbildung entsprechender Anschlußaufnahmen an den durch Gußteile gebildeten senkrechten Rahmenteilen die waagrechten Rahmenteile und insbesondere auch der Fensterrahmen durch Längenabschnitte eines Strangpressprofiles gebildet sind. Hinsichtlich der Ausbildung und Befestigung der türseitigen Scharniergelenkhälften ist bei der bekannten Gestaltungsform eines einen Rahmenteil für Kraftwagentüren bildenden Gußteiles ist lediglich vorgesehen, daß die Scharniergelenkhälften einteilig mir dem Gußteil ausgebildet sein können. Hinsichtlich der Ausbildung oder Anordnung des türseitigen Teiles eines Türfeststellers weist die bekannte Ausbildung eines Gußteiles keine besondere Ausführungsform auf, so daß davon auszugehen ist, daß der türseitige Teil des Türfeststellers auch bei der bekannten Ausbildung eines Türrahmens für Kraftwagentüren als gesondert hergestelltes Einzelteil in herkömmlicher Weise und insbesondere mittels Verschraubung an die Fahrzeugtüre bzw. deren Rahmen angeschlossen werden muß. Grundsätzlich nachteilig ist an der bekannten Rahmenbauweise der Fahrzeugtüre der Umstand, daß einerseits ein verhältnismäßig hoher Aufwand für die Ausbildung der senkrecht gerichteten Rahmenteile als Gußformteile erforderlich ist, andererseits aber der im Zusammenhang mit einer Rahmenbauweise anfallende Aufwand nicht verringert werden kann.

EP-A-0 291 107 beschreibt eine Konstruktions- und Herstellungsweise für Kraftwagentüren, bei der der Türkörper ein selbsttragendes, aus zwei miteinander verbundenen Halbschalen gebildetes Bauteil ist, in welches ein als einseitig offener U-förmiger Träger ausgebildeter Aggregateträger samt angebautem Aggregat von der einen Türkörperstirnseite her einschiebbar ist. Der in den Türkörper einschiebbare Aggregateträger wird dabei im Wege herkömmlicher Montage und Verbindungsarbeiten, wie Verschrauben oder Verschweißen, aus einem Stirnteil und zwei Längsträgern als vorgefertigte Baueinheit zusammengebaut und anschließend mit den von ihm abzustützenden Aggregaten, insbesondere einem Fensterheber, verbunden, bevor er in den seinerseits als vorgefertigte Baueinheit aus zwei Blechschalen gebildeten, selbsttragenden Türkörper eingesetzt wird.

EP-A-0 648 662 beschreibt eine Scharniersäule und ein Verfahren zur Herstellung einer Scharniersäulenverbindung, bei der bestimmte Querschnitte und Profile, insbesondere Hohlprofile, vorgegeben sind, wobei aus diesen insbesondere eine Türaußenschale hergestellt ist, die auf ein nicht näher definiertes Gerippe angesetzt werden soll.

Es ist die Aufgabe der Erfindung, eine Kraftwagentür nach dem Oberbegriff des Anspruchs 1 anzugeben, welche bei hinreichender Stabilität des Türkörpers unter geringem Aufwand die Ausbildung und den Zusammenbau der Rahmenteile der Kraftwagentür bzw. den Anschluß der türseitigen Scharnierhälften der Anlenkung der Fahrzeugtür ermöglicht.

Diese Aufgabe wird bei der eingangs genannten Kraftwagentür erfindungsgemäß mit den kennzeichnenden Merkmalen des Anspruchs 1 gelöst.

Die erfindungsgemäße Kraftwagentür gestattet zudem in einfacher Weise die Anbindung von An- und Einbauteilen der Tür.

Eine solcherart ausgestattete Kraftwagentür ermöghcht es, einem Türrahmen eine hinreichende Eigensterfigkeit zu verleihen, wobei sich infolge der Anwendung formschlüssig verriegelbarer Steckverbindungen zugleich der für den Zusammenbau des Türrahmens erforderliche Aufwand erheblich verringert. Über diese baulichen Vorteile hinaus bietet die erfindungsgemäße Anwendung verriegelbarer Steckverbindungen an einem Funktionsmodul für Kraftwagentüren zugleich auch eine Anzahl von Vereinfachungen hinsichtlich der Anbringung bzw. des Anschlusses, sowohl der Türeinbauten, wie Fensterheber und dergl., als auch der Anbringung der Türbeplankung und der den Türkörper ergänzenden Türteile, wie Fensterrahmen oder Spiegeldreieck bzw. Dichtungsprofile und dergleichen mehr.

In einer ersten Verwirklichungsform für eine erfindungsgemäße Kraftwagentür ist dabei vorgesehen, daß die Steckanschlüsse des Türrahmenstirnteiles durch in wenigstens eine seiner Stirnseiten mündende, hinterschnittene Nutausnehmungen gebildet sind, wobei die die Steckanschlüsse bildenden Nutausnehmungen T-förmige oder eine schwalbenschwanzförmige oder aber jede andere geeignete Hinterschneidungen aufweisende, insbesondere eine zugfeste Verbindung gewährleistende Querschnittsform aufweisen können. Dadurch ist einerseits eine stabile Verbindung zwischen Längs-und Vertikalträgern eines Türrahmens gewährleistet und andererseits eine gewisse Vereinheitlichung der Anschluß-bzw. Verbindungsmittel in der Weise erreicht, als diese im Zuge einer Herstellung sowohl der Türrahmenteile als beispielsweise auch der Scharnierhälften ohne zusätzlichen Aufwand erzeugt werden können.

In einer hinsichtlich der Ausbildung des vorderen Türrahmenstirnteiles besonders bevorzugten Ausgestaltungsform ist dabei weiterhin vorgesehen, daß das Türrahmenstirnteil einerseits, insbesondere an seiner dem Türrahmeninneren zugeordneten Seite, mit zwei parallelen, in seiner vertikalen Längsrichtung verlaufenden und andererseits, insbesondere an seiner der Türrahmenaußenseite zugeordneten Seite, mit einer in seiner Längsrichtung verlaufenden Nutausnehmung ausgestattet ist, wobei die beiden der Türrahmeninnenseite zugeordneten Nutausnehmungen die eine, der Türrahmenaußenseite zugeordnete Nutausnehmung zwischen sich einschließen. Eine solche oder wenigstens vergleichbare Ausgestaltung ermöglicht es, einerseits das Türrahmenstirnteil als verhältnismäßig flaches und damit als einbauraum-und insbesondere gewichtssparendes Bauteil auszubilden, und andererseits zugleich mit Anschlußmitteln einerseits für die Längsträger des Türrahmens und andererseits für die türseitigen Scharnierhälften der Türanlenkung auszustatten.

Hand in Hand mit einer dieserart charakterisierten Ausgestaltung eines Türrahmenstirnteiles ist in dieser ersten Verwirklichungsform dann weiter vorgesehen, daß die an das Türrahmenstirnteil anzuschließenden Teile, insbesondere Rahmenteile oder Scharnierhälften, ihrerseits jeweils mit einem hammerkopfförmigen Anschlußteil ausgestattet sind, wobei die Querschnittsform des Hammerkopfes der jeweils gewählten Querschnittsform der zugehörigen Nutausnehmung im Türrahmenstirnteil entsprechend gestaltet ist. Ein besonderer Vorteil dieser Verwirklichungsform der Erfindung besteht darin, daß sowohl das Türrahmenstirnteil als auch die zugehörigen Anbauteile, wie Türrahmenlängsträger oder Türscharnierhälften, jeweils aus einem Abschnitt eines Strangpressprofiles gebildet werden können.
Die Türrahmenlängsträger können dabei von einem einen im Wesentlichen doppelt-T-förmigen Profilquerschnitt aufweisenden Profilmaterial abgelängt sein, während die an das Türrahmenstirnteil anzuschließenden Scharnierhälften von Türscharnieren durch Längenabschnitte eines mit einem senkrecht zur Ebene ihrer das Scharnierblatt bildenden Profilbereiche ausgerichteten im Querschnitt hammerkopfförmigen Anschlußprofiles ausgestatteten fortlaufenden Scharnierprofilmaterial gebildet sind.

Gemäß einem bevorzugten Merkmal der Erfindung wird die kraftübertragende, die gegenseitige Verbindung von Türrahmenstirnteil und Anbauteilen über einen gegenseitigen formschlüssigen Eingriff und die form-und lagensichernde gegenseitige Verriegelung von Türrahmenstirnteil und Anbauteilen durch wechselseitig ausgebildete bzw. angeordnete und quer zur Steckrichtung ausgerichtete formschlüssige Verriegelungsmittel gebildet.
Insbesondere ist hierzu vorgesehen, daß die quer zur Steckrichtung bzw. Längserstreckung der Nutausnehmungen gerichteten Verriegelungsmittel durch in den Nutausnehmungen im Türrahmenstirnteil und an den Anschlußteilen der mit dem Türrahmenteil zu verbindenden Teile wechselweise angeordneten Ausnehmungen bzw. Vertiefungen und Verriegelungswarzen gebildet sind. Die mit den Teilen des Türrahmens bzw. Anbauteilen einteilige Ausbildung der Verriegelungsmittel erspart nicht nur den Einsatz gesonderter Verbindungsmittel, wie Schraubenbolzen oder Niete oder dergl., sondern trägt insbesondere auch zu einer Verringerung des für den Zusammenbau des Türrahmens erforderlichen Zeitaufwandes bei.

Gemäß einer zweiten Verwirklichungsform kann, ohne das Prinzip der Erfindung zu verlassen, für eine erfindungsgemäße Kraftwagentür aber auch vorgesehen sein, daß die Steckanschlüsse des Türrahmenstirnteiles durch quer zu seiner Ebene vorspringend angeordnete bzw. ausgebildete zapfenförmige Auskragungen oder dergl. und die anzuschließenden Teile wenigstens im Bereich ihrer gegenseitigen Überdeckung mit den zapfenförmigen Auskragungen des Türrahmenstirnteiles durch Hohlprofile gebildet sind. Charakteristisches Merkmal auch dieser Verwirklichungsform ist, daß die gegenseitige Verriegelung von zapfenförmiger Auskragung und anzuschließendem Teil mittels einer quer zur Steckrichtung gerichteten gegenseitigen formschlüssigen Verriegelung erfolgt.

Insbesondere kann hierfür vorgesehen sein, daß die quer zur Steckrichtung gerichteten Verriegelungsmittel für ein mit einem der Steckanschlüsse des Türrahmenstirnteiles zu verbindendes weiteres Teil durch in diesen und den zapfenförmigen Auskragungen wechselweise angeordnete Ausnehmungen bzw. Vertiefungen und Verriegelungswarzen gebildet sind. Als besonders vorteilhaft wird dabei angesehen, daß die Ausnehmungen bzw. Vertiefungen in dem mit dem jeweiligen Steckanschluß des Türrahmenstirnteiles zu verbindenden und als Hohlprofil ausgebildeten weiteren Teil ausgebildet bzw. angeordnet sind.

Bei dieser Verwirklichungsform bietet sich als praktikable Gestaltungsform für eine gegenseitige Verriegelung von zapfenförmiger Auskragung und anzuschließendem Teil auch an, daß die quer zur Steckrichtung gerichteten Verriegelungsmittel für ein mit einem der zapfenförmigen Steckanschlüsse des Türrahmenstirnteiles zu verbindendes weiteres Teil durch mindestens eine im zapfenförmigen Steckanschluß wenigstens teilweise umlaufend ausgebildete Einkerbung bzw. Nut und eine im Rahmen des Zusammenbauens des Türrahmens in das anzuschließende Teil deckungsgleich einzubringende Verformung oder Verprägung gebildet sind.
In weiterer Ausgestaltung eines Türrahmenstirnteiles kann ohne Beschränkung hierauf zweckmäßigerweise noch vorgesehen sein, daß das Türrahmenstirnteil in wenigstens einer seiner Umfangsflächen minsdestens einen durch eine Nutausnehmung Steckanschluß für Verkleidungsteile der Türe aufweist.

Gemäß einer zweiten Verwirklichungsform kann, ohne das Prinzip der Erfindung zu verlassen, für eine erfindungsgemäße Kraftwagentür aber auch vorgesehen sein, daß die Steckanschlüsse des Türrahmenstirnteils durch wenigstens eine zur Türrahmeninnenseite hin weisende, in seiner Längsrichtung ausgerichtete Verrippung mit wenigstens zwei Rippen gebildet sind. Bei dieser Verwirklichungsform eines Funktionsmodules bietet es sich in besonderer Weise vorteilhaft an, daß das Türrahmenstirnteil über seine Längserstreckung hin einen Hohlprofilquerschnitt mit daran ausgebildeter längsgerichteter Verrippung aufweist. Dabei kann vorgesehen sein, daß das Türrahmenstirnteil insgesamt als im Wege des Innenhochdruckumformung aus einem Profilmaterialabschnitt oder einem zu einem Hohlprofil gerollten und längsnahtgeschweißten Blechmaterialzuschnitt eines Leichtbauwerkstoffes geformtes und mit im Zuge der Innenhochdruckumformung unlösbar angebundenen Scharniergelenkteilen ausgestattetes Formteil ausgebildet ist. Bei einer solchen Verwirklichungsform können die an dem Funktionsmodul anzuordnenden Scharniergelenkhälften als gesonderte Bauteile, vorzugsweise aus einem anderen Werkstoff, insbesondere Stahl, hergestellt und gegebenenfalls unter Ausnutzung besonderer Formgebungen, beispielsweise Durchbrüche oder dergl., über Materialverzahnung unlösbar mit dem Körper des Funktionsmodules verbunden sein.
Ferner kann im Rahmen der erfindungsgemäßen Gestaltung eines Türrahmenstirnteiles weiterhin vorgesehen sein, daß das Türrahmenstirnteil wenigstens einen oberendig angeordneten, verriegelbaren Steckanschluß für einen Fensterschachtträger aufweist und die zur Türrahmeninnenseite hin weisende Verrippung mit Mitteln zur formschlüssigen Befestigung und Verriegelung eines als eigenständige Baueinheit ausgebildeten Fensterhebers ausgestattet ist.

Hinsichtlich der Verbindung der sonstigen Türausstattungtseile mit einem Türrahmenstirnteil kann weiterhin auch noch vorgesehen sein, daß das Türrahmenstirnteil mit einer gesonderten, gleichfalls als verriegelbarer Steckanschluß ausgebildeten Anschlußeinrichtung für einen innerhalb des Türkörpers anzuordnenden Seitenaufprallschutz, insbesondere einen durch einen Profilmaterialträger gebildeten Seitenaufprallschutz, versehen ist. Des Weiteren kann das Türrahmenstirnteil auch mit als verriegelbare formschlüssige Steckanschlüße gebildeten Anschluß-bzw. Befestigungsmitteln für sonstige Teile eines Türkörpers ausgestattet werden, insbesondere kann vorgesehen sein, daß es im Bereich seiner vertikal verlaufenden Längsränder wenigstens mit Anschlußnuten für die Befestigung zumindest einer Türinnenbeplankung, vorzugsweise aber auch mit Anschlußnuten für die Befestigung einer durch plattenförmige, aus einem Kunststoffmaterial bestehende Elemente einer Türaußenbeplankung versehen ist. In diesem Zusammenhang führt eine weitere Einzelausgestaltung dann auch noch zur Ausbildung von Aufnahmenuten zur Befestigung eines Abschnittes der im übrigen umlaufend angeordneten Türdichtung an seiner glattflächigen, der Türstirnseite zugeordneten Oberfläche.

In den Rahmen der Erfindung fallen selbstverständlich auch noch sonstige, hier nicht im Einzelnen erwähnte Ausformungen eines ein Türrahmenstirnteil bildenden Funktionsmodules und an solches anzuschließender Ein-oder Anbauten des Türkörpers.

Die Erfindung ist in der nachfolgenden Beispielsbeschreibung anhand eines in der Zeichnung schematisch dargestellten Ausführungsbeispieles im Einzelnen beschrieben.
- Fig. 1: zeigt eine schematische schaubildliche Darstellung eines mit einem erfindungsgemäßen Funktionsmodul ausgestatteten Kraftfahrzeuges;
- Fig. 2: zeigt eine teilweise schaubildliche Darstellung eines unter Verwendung eines erfindungsgemäßen Türrahmenstirnteiles gebauten Kraftwagentürrahmens;
- Fig. 3: zeigt eine ausschnittsweise Einzeldarstellung des Türrahmens nach Fig. 2;
- Fig. 4: zeigt eine teilweise schaubildliche Darstellung einer anderen Ausführungsform eines unter Verwendung eines erfindungsgemäßen Türrahmenstirnteiles gebauten Kraftwagentürrahmens;
- Fig. 5: zeigt eine ausschnittsweise Einzeldarstellung des Türrahmens nach Fig. 4;
- Fig. 6: zeigt eine schaubildliche Außenansicht einer weiteren Ausführungsform eines erfindungsgemäßen Türrahmenstirnteiles für Kraftwagentürrahmen;
- Fig. 7: zeigt eine schaubildliche Innenansicht des Türrahmenstirnteiles nach Fig. 6;
- Fig. 8: zeigt einen Schnitt durch das Türrahmenstirnteil nach Fig. 6 und 7.

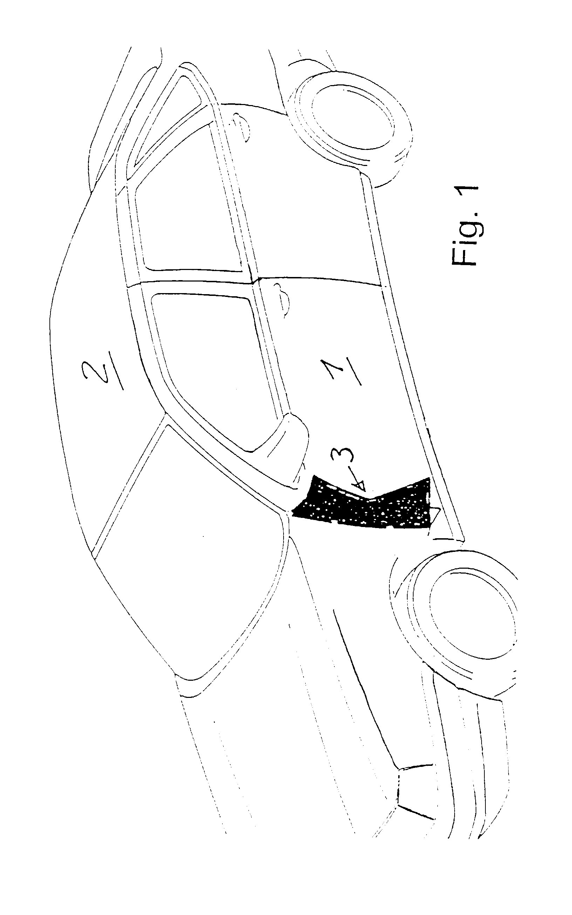

Die Seitentüre 1 eines in Fig. 1 schematisch dargestellten Kraftfahrzeuges 2 ist unter Verwendung eines Funktionsmodules aufgebaut. Der Türrahmen der Seitentüre besteht in allen gezeigten Ausführungsbeispielen aus wenigstens einem vorderen und einem hinteren Türrahmenstirnteil 3 und wenigstens einem oberen 5 bzw. 6 und einem unteren 7 bzw. 8 Türlängsträger sowie einem Seitenaufprallschutzträger 9 und an die vordere Türrahmenstirnteil seite 4 angeschlossenen türseitigen Scharnierhälften 10, wobei alle Teile des Türrahmens untereinander über formschlüssige und verriegelbare Steckanschlüsse verbunden sind.

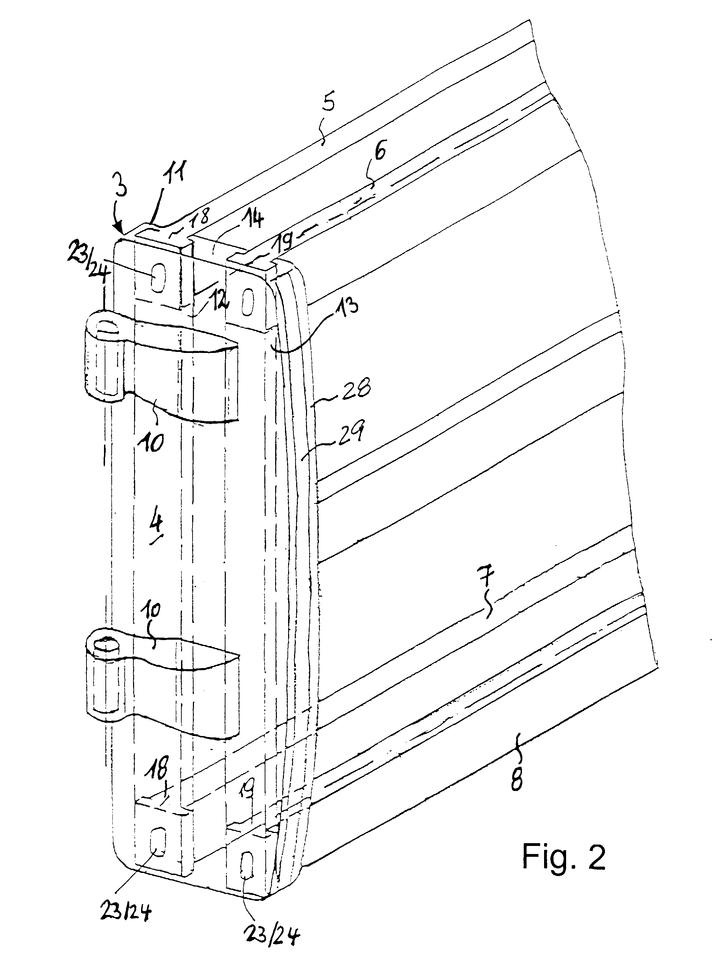

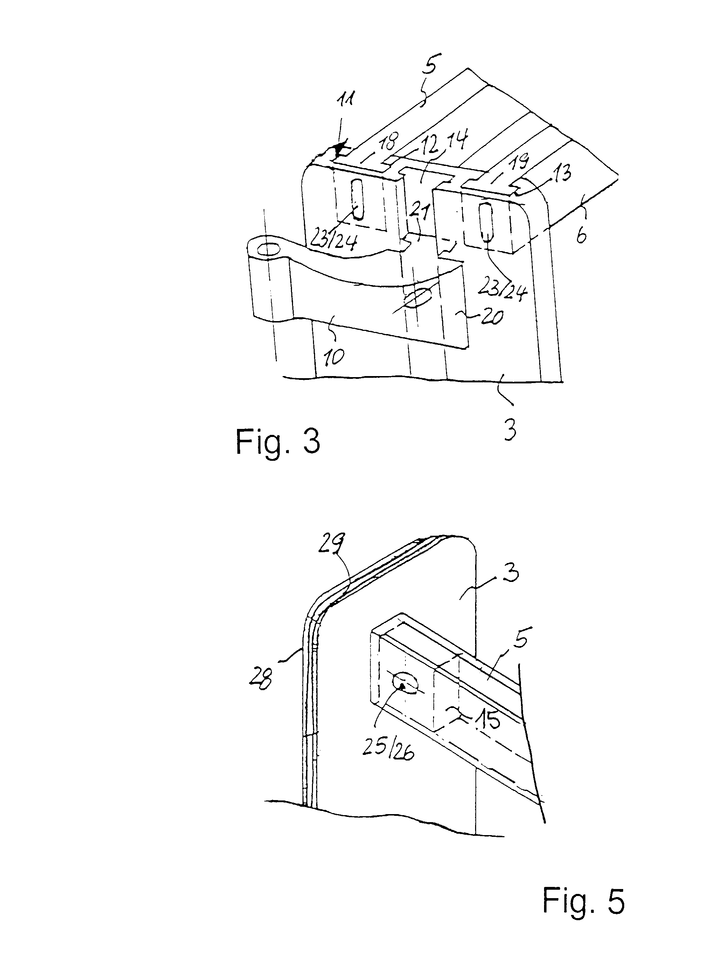

Bei der in Fig. 2 und 3 dargestellten ersten Ausführungsform eines unter Verwendung eines erfindungsgemäßen Türrahmenstirnteiles 3 gebauten Kraftwagentürrahmens sind die türrahmenstirnteilseitigen Teile von formschlüssigen Steckanschlüssen durch in wenigstens eine der Stirnseiten 11 des Türrahmenstirnteiles 3 mündende, hinterschnittene Nutausnehmungen 12, 13 bzw. 14 gebildet. Die die Steckanschlüsse bildenden Nutausnehmungen 12, 13 bzw. 14 weisen hier eine T-förmige Querschnittsform auf. Das Türrahmenstirnteil 3 ist dabei (nach Fig. 2) an seiner dem Türrahmeninneren zugewandten Seite mit zwei parallelen, in seiner vertikalen Längsrichtung verlaufenden Nutausnehmungen 12 und 13 und an seiner der Türrahmenaußenseite zugewandten Seite mit einer in seiner Längsrichtung verlaufenden Nutausnehmung 14 ausgestattet, wobei die beiden der Türrahmeninnenseite zugeordneten Nutausnehmungen 12 und 13 die eine, der Türrahmenaußenseite zugeordnete Nutausnehmung 14 zwischen sich einschließen. Gemäß der Darstellung in Fig. 3 kann aber auch vorgesehen sein, daß sich die Nutausnehmungen 12 und 13 lediglich über einen Teil der Länge des Türrahmenstirnteiles 3 hin erstrecken.
Die an das Türrahmenstirnteil 3 anzuschließenden Türrahmenlängsträger 5 und 6 und die Scharnierhälften 10 sind jeweils mit einem hammerkopfförmigen Anschlußteil 18 bzw. 19 ausgestattet, dessen Querschnittsform der lichten Weite der Querschnittsform der zugehörigen Nutausnehmung 12,13 bzw. 14 im Türrahmenstirnteil 3 entsprechend gestaltet ist. In der dargestellten Ausführungsform sind sowohl das Türrahmenstirnteil 3 als auch die zugehörigen Anbauteile, wie Türrahmenlängsträger 5 und 6 oder Türscharnierhälften 10, jeweils aus einem Abschnitt eines Strangpressprofiles gebildet.
Die Türrahmenlängsträger 5 und 6 sind dabei von einem einen im Wesentlichen doppelt-T-förmigen Profilquerschnitt aufweisenden Profilmaterial abgelängt, während die an das Türrahmenstirnteil 3 anzuschließenden Scharnierhälften 10 durch Längenabschnitte eines mit einem senkrecht zur Ebene ihrer das Scharnierblatt 20 bildenden Profilbereiche ausgerichteten im Querschnitt hammerkopfförmigen Anschlußprofiles 21 1 ausgestatteten fortlaufenden Scharnierprofilmaterial gebildet sind. Die form-und lagensichernde gegenseitige Verriegelung von Türrahmenstirnteil 3 und Anbauteilen ist durch wechselseitig ausgebildete bzw. angeordnete und quer zur Steckrichtung ausgerichtete formschlüssige Verriegelungsmittel gebildet, wobei die quer zur Steckrichtung bzw. Längserstreckung der Nutausnehmungen 12,13 und 14 gerichteten Verriegelungsmittel durch in den Nutausnehmungen 12,13 und 14 im Türrahmenstirnteil 3 angeordnete Ausnehmungen bzw. Vertiefungen 23 und an den Anschlußteilen der mit dem Türrahmenstirnteil 3 zu verbindenden Teile angeordnete Verriegelungswarzen 24 gebildet sind.

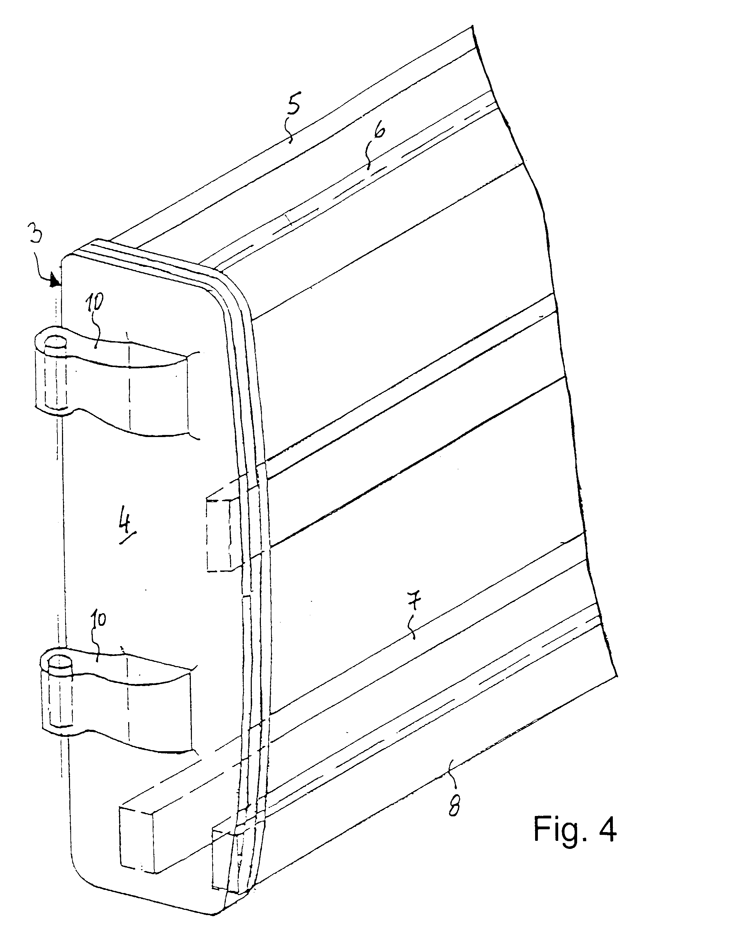

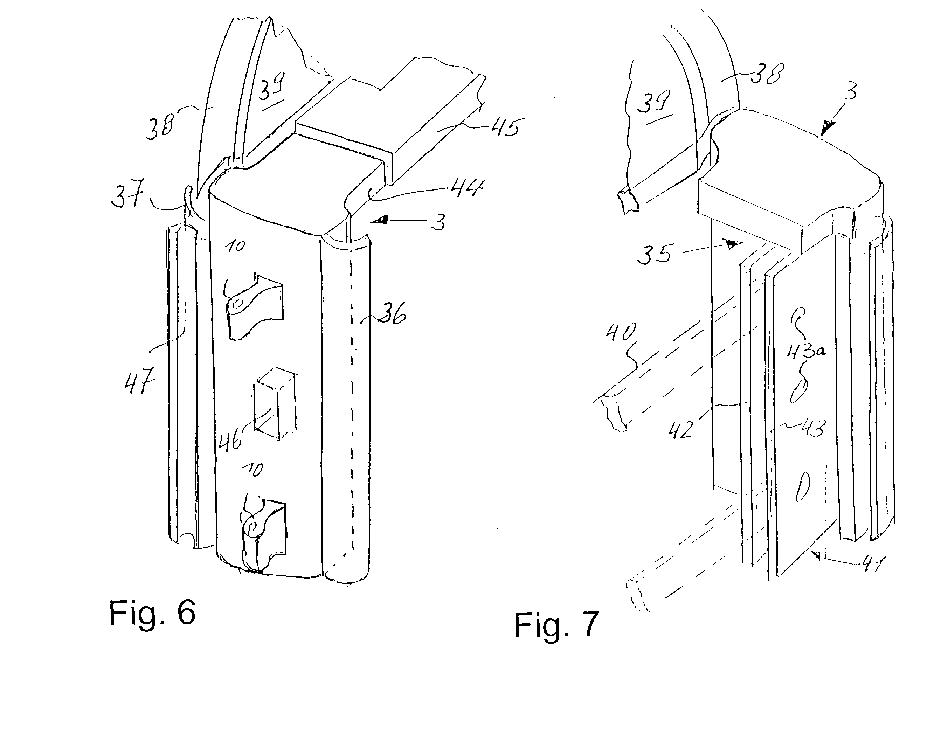

Bei der in Fig. 4 und 5 dargestellten Ausführungsform sind die türrahmenstirnteilseitigen Teile von formschlüssigen und verriegelbaren Steckanschlüssen des Türrahmenstirnteiles 3 durch quer zu seiner Ebene vorspringend angeordnete bzw. ausgebildete zapfenförmige Auskragungen 15 gebildet und die anzuschließenden Teile, wie Türrahmenlängsträger 5 und 6 durch Längenabschnitte eines Hohlprofilmaterials gebildet. Die gegenseitige, quer zur Steckrichtung gerichtete und formschlüssige Verriegelung der zapfenförmigen Auskragungen 15 und der anzuschließenden Teile erfolgt bei dieser Ausführungsform in der Weise, daß die die quer zur Steckrichtung gerichteten Verriegelungsmittel für ein mit einem der zapfenförmigen Steckanschlüsse 15 des Türrahmenstirnteiles 3 zu verbindendes weiteres Teil durch mindestens eine am zapfenförmigen Steckanschluß 15 ausgebildete Verriegelungswarze 25 und eine im anzuschließenden Teil deckungsgleich angeordnete Ausnehmung oder Vertiefung 26 gebildet sind. Aus der Darstellung der Fig. 1 ist ebenso wie aus der Darstellung der Fig. 4 in schematischer Weise erkennbar, daß das Türrahmenstirnteil 3 in wenigstens einer seiner Umfangsflächen 28 mindestens einen durch eine Nutausnehmung 29 gebildeten Steckanschluß für in der Zeichnung nicht besonders dargestellte Verkleidungsteile der Türe aufweist

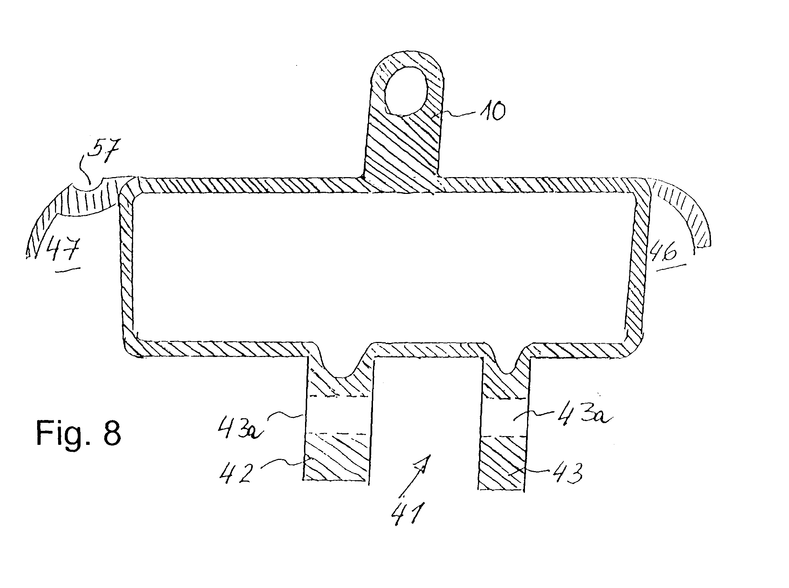

Bei der in Fig. 6 bis 8 dargestellten Ausführungsform ist das Türrahmenstirnteil 3 mit Anschlußmitteln 35, 36 und 37 für Trag- 38 und Ausstattungsteile 39 sowie gegebenenfalls Beplankungsteile sowie Dichtungsabschnitte der Türe 1 ausgestattet. Die Anschlußmittel 35 für die Anbindung von Ausstattungsteilen der Türe 1, beispielsweise eines in der Zeichnung nur andeutungsweise dargestellten Fensterhebers 40, sind durch eine zur Türmitte hin weisende in Längsrichtung des Türrahmenstirnteiles 3 verlaufende Verrippung 41 gebildet, wobei die Verrippung 41 in der gezeigten Ausführungsform zwei Rippen 42 und 43 umfaßt und mit Mitteln, insbesondere Verriegelungsausnehmungen 43a zur Befestigung des als eigenständige Baueinheit ausgebildeten Fensterhebers 40 ausgestattet ist. Die Verrippung 41 bildet zugleich auch eine Aussteifung des Türrahmenstirnteiles 3. Ferner ist das Türrahmenstirnteil 3 mit einem oberendig angeordneten Anschlußstutzen 44 für einen Fensterschachtträger 45 und unterendig mit einem weiteren Anschlußstutzen für ein weiteres Bauteil der Türe ausgestattet. An das Türrahmenstirnteil 3 ist darüber hinaus noch ein Haltergehäuse 46 wenigstens für die Aufnahme des türseitigen Teiles eines im Übrigen nicht besonders dargestellten Türfeststellers angeschlossen. Von den Anschluß-bzw. Befestigungsmitteln 35,36 und 37 für sonstige Teile eines Türrahmens dienen die im Bereich seines inneren vertikal verlaufenden Längsrandes verlaufenden Anschlußnuten 36 der Befestigung einer im Einzelnen nicht dargestellten Türinnenbeplankung. Die im Bereich seines äußeren vertikal verlaufenden Längsrandes verlaufenden Anschlußnuten 47 dienen der Befestigung einer durch plattenformige, aus einem Kunststoffmaterial bestehende Elemente einer im Einzelnen gleichfalls nicht dargestellten Türaußenbeplankung. Im Zusammenhang mit den Anschlußnuten 47 sind auch noch Aufnahmenuten 57 zur Befestigung eines Abschnittes einer im übrigen umlaufend angeordneten Türdichtung ausgebildet. Im Bereich seines oberen Endes ist das Türrahmenstirnteil 3 zusätzlich mit Anschlußmitteln für einen Türfensterrahmen 48 und gegebenenfalls ein Spiegeldreieck 49 versehen.

## Patentansprüche

1. Kraftwagentür, welche als Funktionsmodul aus einem wenigstens teilweise umlaufend innerhalb des Türkörpers angeordneten Rahmen, einer inneren und einer äußeren Beplankung sowie Einbauten, wie Fensterheber, Schloß- und Verriegelungseinrichtungen, besteht, und mit Scharniergelenkhälften (10) zur Anlenkung der Türe an eine Türsäule der Fahrzeugkarosserie ausgestattet sind,
gekennzeichnet durch
ein vertikal ausgerichtetes vorderes oder hinteres Türrahmenstirnteil (3) mit Steckanschlüssen (12-14; 15) für weitere Türrahmenteile (5-8) sowie an den Türrahmen anzuschließende Ausstattungsteile (10) für eine Kraftwagentür, wobei die Steckanschlüsse jeweils mit quer zur Steckrichtung gerichteten Verriegelungsmitteln (24; 26) für das mit dem Türrahmenteil zu verbindende weitere Teil versehen sind.

2. Kraftwagentür nach Anspruch 1, dadurch gekennzeichnet, daß die Steckanschlüsse des Türrahmenstirnteils (3) durch in wenigstens eine seiner Stirnseiten mündende, hinterschnittene Nutausnehmungen (12-14) gebildet sind.

3. Kraftwagentür nach Anspruch 2, dadurch gekennzeichnet, daß die weiteren Türrahmenteile, insbesondere die Türrahmenlängsträger (5-8), durch Abschnitte von Strangpressprofilen gebildet und an ihren Enden mit zur Querschnittsform der Nutausnehmungen komplementären Profilformen versehen sind.

4. Kraftwagentür nach Anspruch 2 oder 3, dadurch gekennzeichnet, daß die die Steckanschlüsse bildenden Nutausnehmungen (12-14) T-förmige Querschnittsform aufweisen.

5. Kraftwagentür nach Anspruch 2 oder 3, dadurch gekennzeichnet, daß die die Steckanschlüsse bildenden Nutausnehmungen (12-14) schwalbenschwanzförmige Querschnittsform aufweisen.

6. Kraftwagentür nach einem der Ansprüche 2 bis 5, dadurch gekennzeichnet, daß die an das Türrahmenstirnteil (3) anzuschließenden Teile, insbesondere Rahmenteile (5-8) oder Scharnierhälften (10), ihrerseits mit einem hammerkopfförmigen Anschlußteil ausgestattet sind.

7. Kraftwagentür nach einem der Ansprüche 1 bis 6, dadurch gekennzeichnet, daß das Türrahmenstirnteil (3) einerseits, insbesondere an seiner dem Türrahmeninneren zugeordneten Seite, mit zwei parallelen, in seiner vertikalen Längsrichtung verlaufenden Nutausnehmungen (12, 13) und andererseits, insbesondere an seiner der Türrahmenaußenseite zugeordneten Seite, mit einer in seiner Längsrichtung verlaufenden Nutausnehmung (14) ausgestattet ist, wobei die beiden der einen Türrahmenseite zugeordneten Nutausnehmungen (12, 13) die eine, der anderen Türrahmenseite zugeordnete Nutausnehmung (14) zwischen sich einschließen.

8. Kraftwagentür nach einem der Ansprüche 1 bis 7, dadurch gekennzeichnet, daß das Türrahmenstirnteil (3) durch einen in geeigneter Weise beschnittenen Längenabschnitt eines Strangpreßprofils gebildet ist.

9. Kraftwagentür nach einem der Ansprüche 1 bis 8, dadurch gekennzeichnet, daß die quer zur Steckrichtung bzw. Längserstreckung der Nutausnehmungen gerichteten Verriegelungsmittel (24) durch in Nutausnehmungen im Türrahmenstirnteil (3) und an den Anschlußteilen der mit dem Türrahmenteil zu verbindenden Teile wechselweise angeordneten Ausnehmungen bzw. Vertiefungen (23) und Verriegelungswarzen (24) gebildet sind.

10. Kraftwagentür nach einem der Anspüche 1 bis 9, dadurch gekennzeichnet, daß an das Türrahmenstirnteil (3) anzuschließende Scharnierhälften (10) von Türscharnieren mit senkrecht zur Ebene ihres Scharnierblattes (20) ausgerichteten, im Querschnitt hammerkopfförmigen Anschlußteilen (21) ausgestattet sind.

11. Kraftwagentür nach Anspruch 1, dadurch gekennzeichnet, daß die Steckanschlüsse des Türrahmenstirnteils (3) durch quer zu ihrer Ebene vorspringend angeordnete bzw. ausgebildete zapfenförmige Auskragungen (15) oder dergleichen und die anzuschließenden Teile (5-8) durch Hohlprofile gebildet sind.

12. Kraftwagentür nach Anspruch 11, dadurch gekennzeichnet, daß die quer zur Steckrichtung gerichteten Verriegelungsmittel (26) für ein mit einem der Steckanschlüsse des Türrahmenstirnteils (3) zu verbindendes weiteres Teil durch in diesen und den zapfenförmigen Auskragungen (15) wechselweise angeordneten Ausnehmungen bzw. Vertiefungen (25) und Verriegelungswarzen (26) gebildet sind.

13. Kraftwagentür nach Anspruch 11 oder 12, dadurch gekennzeichnet, daß die Ausnehmungen bzw. Vertiefungen in dem mit einem der Steckanschlüsse des Türrahmenstirnteiles zu verbindenden weiteren Teil ausgebildet sind.

14. Kraftwagentür nach Anspruch 11 bis 13, dadurch gekennzeichnet, daß die die quer zur Steckrichtung gerichteten Verriegelungsmittel (26) für ein mit einem der zapfenförmigen Steckanschlüsse des Türrahmenstirnteils (3) zu verbindendes weiteres Teil bildenden Verriegelungsmittel durch mindestens eine im zapfenförmigen Steckanschluß wenigstens teilweise umlaufend ausgebildete Einkerbung bzw. Nut (29) und eine in das anzuschließende Teil deckungsgleich einzubringende Verformung bzw. Verprägung gebildet sind.

15. Kraftwagentür nach Anspruch 11 bis 14, dadurch gekennzeichnet, daß das Türrahmenstirnteil (3) in wenigstens einer seiner Umfangsflächen (28) mindestens einen durch eine Nutausnehmung (29) gebildeten Steckanschluß für Verkleidungsteile der Türe aufweist.

16. Kraftwagentür nach Anspruch 1, gekennzeichnet durch eine Ausbildung als Formteil im Wege des Innenhochdruckumformung aus einem Profilmaterialabschnitt eines Leichtbauwerkstoffes mit im Zuge der Innenhochdruckumformung unlösbar angebundenen Scharniergelenkteilen (10).

17. Kraftwagentür nach einem der Ansprüche 1 bis 16, dadurch gekennzeichnet, daß das Türrahmenstirnteil (3) eine glattflächige Außenseite und eine zum Türrahmeninneren hin weisende, in seiner Längsrichtung ausgerichtete Verrippung (41) sowie wenigstens einen oberendig angeordneten Anschlußstutzen (44) für weitere Türrahmenteile, insbesondere einen Fensterschachtträger (45), aufweist.

18. Kraftwagentür nach Anspruch 17, dadurch gekennzeichnet, daß die zur Türmitte hin weisende Verrippung (41) mit Mitteln zur Befestigung eines als eigenständige Baueinheit ausgebildeten Fensterhebers (40) ausgestattet ist.

19. Kraftwagentür nach einem der Ansprüche 1 bis 18, dadurch gekennzeichnet, daß das Türrahmenstirnteil (3) zusätzlich zu einem oberendig angeordneten und mit Verriegelungsmitteln ausgestatteten Steckanschluß (44) für einen Fensterschachtträger unterendig einen weiteren Anschlußstutzen (47) für ein weiteres Rahmenteil (48) für die Tür aufweist.

20. Kraftwagentür nach einem der Ansprüche 1 bis 19, dadurch gekennzeichnet, daß das Türrahmenstirnteil (3) mit einteilig ausgeformten Mitteln, wenigstens für die Aufnahme des türseitigen Teils eines Türfeststellers, insbesondere einem Haltergehäuse (46), ausgestattet ist.

21. Kraftwagentür nach einem der Ansprüche 1 bis 20, dadurch gekennzeichnet, daß das Türrahmenstirnteil (3) mit einer gesonderten als verriegelbarer Steckanschluß ausgebildeten Anschlußeinrichtung für einen innerhalb des Türkörpers anzuordnenden Seitenaufprallschutz, insbesondere einen durch einen Profilmaterialträger (9) gebildeten Seitenaufprallschutz, versehen ist.

22. Kraftwagentür nach einem der Ansprüche 1 bis 21, dadurch gekennzeichnet, daß das Türrahmenstirnteil (3) an seiner der Türstirnseite zugeordneten Oberfläche (4) zusätzlich mit Aufnahmenuten (57) zur Befestigung eines Abschnitts der im übrigen umlaufend angeordneten Türdichtung versehen ist.

23. Kraftwagentür nach einem der Ansprüche 1 bis 22, dadurch gekennzeichnet, daß das Türrahmenstirnteil (3) im Bereich seines oberen Endes zusätzlich mit durch verriegelbare Steckanschlüße gebildeten Anschlußmitteln für einen Türfensterrahmen (48) und gegebenenfalls ein Spiegeldreieck (49) versehen ist.

## Claims

1. Motor vehicle door which as a functional module consists of a frame positioned at least partly running round within the door body, an inner and an outer planking as well as fixtures such as a window lifter, locking and bolting installations, and equipped with hinge halves (10) for linking the door on a door column of the vehicle bodywork,
characterised by
a vertically oriented front or back door frame front component (3) with connections (12-14; 15) for further door frame components (5-8) as well as equipment components (10) for a motor vehicle door to be connected on the door frame, wherein the connections are respectively equipped with bolting means (24, 26) for the further component to be connected to the door frame component, wherein these bolting means (24, 26) are oriented at right angles to the connection direction.

2. Motor vehicle door according to Claim 1 characterised in that the connections of the door frame front component (3) are formed from back-cut groove recesses (12-14) which run into at least one of the front sides thereof.

3. Motor vehicle door according to Claim 2 characterised in that the further door frame components, in particular the door frame longitudinal carriers (5-8), are formed from sections of track pressed profiles and are equipped on their ends with profiled forms complementary to the cross-sectional form of the groove recesses.

4. Motor vehicle door according to Claim 2 or 3 characterised in that the groove recesses (12-14) forming the connections have a T-shaped cross-sectional form.

5. Vehicle door according to Claim 2 or 3 characterised in that the groove recesses (12-14) forming the connections have a dovetail cross-sectional form.

6. Motor vehicle door according to one of the Claims 2 to 5 characterised in that the components to be connected to the door frame front component (3), in particular frame components (5-8) or hinge halves (10), are for their part equipped with a hammer-head-form connecting component.

7. Motor vehicle door according to one of the Claims 1 to 6 characterised in that the door frame front component (3) on the one hand, particularly on its side associated with the door frame interior, is equipped with two parallel groove recesses (12, 13) running in its vertical longitudinal direction and on the other hand, particularly on its side associated with the door frame outer side, is equipped with one groove recess (14) running in its longitudinal direction, wherein the two groove recesses (12, 13) associated with the one door frame side enclose between them the one groove recess (14) associated with the other door frame side.

8. Motor vehicle door according to one of the Claims 1 to 7 characterised in that the door frame front component (3) is formed from a suitably cut longitudinal section of a track pressed profile.

9. Motor vehicle door according to one of the Claims 1 to 8 characterised in that the bolting means (24) oriented at right angles to the connection direction / longitudinal extension of the groove recesses are formed from alternately positioned recesses / hollows (23) and bolting nipples (24) in groove recesses in the door frame front component (3) and on the connection parts of the components to be connected to the door frame component.

10. Motor vehicle door according to one of the Claims 1 to 9 characterised in that hinge halves (10) of door hinges to be connected to the door frame front component (3) are equipped with connection components (21) which are hammer-head-shaped in cross-section and oriented vertically to the plane of their hinge leaf (20).

11. Motor vehicle door according to Claim 1 characterised in that the connections of the door frame front component (3) are formed from stopper-form projections (15) positioned or formed protruding at right angles to their plane or similar and the components (5-8) to be connected are formed from hollow profiles.

12. Motor vehicle door according to Claim 11 characterised in that the bolting means (26), which are oriented at right angles to the connection direction, for a further component to be connected to one of the connections of the door frame front component (3) are formed from recesses / hollows (25) and bolting nipples (26) positioned alternately therein and in the stopper-form projections (15).

13. Motor vehicle door according to Claim 11 or 12 characterised in that the recesses / hollows are formed in the further component to be connected to one of the connections of the door frame front component.

14. Motor vehicle door according to Claim 11 to 13 characterised in that the bolting means forming the bolting means (26), oriented at right angles to the connection direction, for a further component to be connected with one of the stopper-form connections of the door frame front component (3) are formed from at least one notch / groove (29) formed at least partly running round in the stopper-form connection, and a deformation / de-shaping to be brought in a same-coverage way into the component to be connected.

15. Motor vehicle door according to Claim 11 to 14 characterised in that the door frame front component (3) has in at least one of its circumferential areas (28) at least one connection for planking components of the door formed from a groove recess (29).

16. Motor vehicle door according to Claim 1 characterised by a formation as a form component in the way of the inner high pressure reshaping part made from a profiled material section of a lightweight building material with hinge components (10) fastened unreleasably in the path of the inner high pressure reshaping part.

17. Motor vehicle door according to one of the Claims 1 to 16 characterised in that the door frame front component (3) has a smooth surface outer side and a ribbing (41) oriented in its longitudinal direction and pointing to the door frame interior as well as at least one upper-end positioned connecting piece (44) for further door frame components, in particular a window tessellation carrier (45).

18. Motor vehicle door according to Claim 17 characterised in that the ribbing (41) pointed to the middle of the door is equipped with means for securing a window lifter (40) formed as an independent component.

19. Motor vehicle door according to one of the Claims 1 to 18 characterised in that the door frame front component (3) has, in addition to an upper-end positioned connection (44) for a window tessellation carrier equipped with bolting means, at the lower end a further connecting piece (47) for a further frame component (48) for the door.

20. Motor vehicle door according to one of the Claims 1 to 19 characterised in that the door frame front component (3) is equipped with one-component means, at least for the reception of the door-side component of a door securing device, in particular a holding case (46).

21. Motor vehicle door according to one of the Claims 1 to 20 characterised in that the door frame front component (3) is equipped with a separate connection component formed as a boltable connection for a side impact protection to be positioned within the door body, in particular a side impact protection formed from a profiled material carrier (9).

22. Motor vehicle door according to one of the Claims 1 to 21 characterised in that the door frame front component (3) is equipped on its upper surface (4) associated with the door front side additionally with reception grooves (57) for securing a section of the door seal otherwise positioned running round.

23. Motor vehicle door according to one of the Claims 1 to 22 characterised in that the door frame front component (3) in the area of its upper end is additionally equipped with connection means for a door window frame (48) and possibly a mirror triangle (49), wherein these connection means are formed from boltable connections.

## Revendications

1. Porte de véhicule qui, en tant que module fonctionnel, se compose d'un cadre placé au moins en partie de manière périphérique dans le corps de porte, d'une garniture intérieure, d'une garniture extérieure et d'accessoires rapportés, comme lève-vitre, dispositif de fermeture et de verrouillage, et qui est équipée de moitiés de charnières **(10)** pour l'articulation de la porte sur une colonne de porte de la carrosserie du véhicule, caractérisée par une partie frontale de cadre de porte avant ou arrière **(3)** orientée verticalement avec des raccords enfichables **(12-14 ; 15)** pour d'autres parties de cadre de porte **(5-8)** ainsi que par des parties d'équipement **(10)** pour porte de véhicule se raccordant sur le cadre de porte, les raccords enfichables étant munis, à chaque fois, de moyens de verrouillage **(24 ; 26)** orientés transversalement à la direction d'enfichage, pour l'autre partie devant être assemblée à la partie de cadre de porte.

2. Porte de véhicule selon la revendication **1**, caractérisée en ce que les raccords enfichables de la partie frontale de cadre de porte **(3)** sont formés d'évidements en rainure **(12-14)** en contre-dépouille débouchant dans au moins l'une de ses faces frontales.

3. Porte de véhicule selon la revendication **2**, caractérisée en ce que les autres parties de cadre de porte, en particulier le support longitudinal de cadre de porte **(5-8)** est formé de découpes de profilés extrudés et sont munis à leurs extrémités de formes de profilés complémentaires de la forme de la section des évidements en rainure.

4. Porte de véhicule selon la revendication **2** ou **3**, caractérisée en ce que les évidements en rainure **(12-14)** formant les raccords enfichables présentent une section en T.

5. Porte de véhicule selon la revendication **2** ou **3**, caractérisée en ce que les évidements en rainure **(12-14)** formant les raccords enfichables présentent une section en queue d'aronde.

6. Porte de véhicule selon l'une des revendications **2** à **5**, caractérisée en ce que les parties se raccordant à la partie frontale de cadre de porte **(3)**, en particulier les parties de cadre **(5-8)** ou les moitiés de charnière **(10)** sont munies de leur côté d'une partie de raccordement en forme de tête de marteau.

7. Porte de véhicule selon l'une des revendications **1** à **6**, caractérisée en ce que la partie frontale de cadre de porte **(3)** est munie d'un côté, en particulier sur son côté associé à l'intérieur du cadre de porte, de deux évidements en rainure **(12, 13)** parallèles s'étendant dans sa direction longitudinale verticale, et d'un autre côté, en particulier sur son côté associé au côté extérieur du cadre de porte, d'un évidement en rainure **(14)** s'étendant dans sa direction longitudinale, les deux évidements en rainure **(12, 13)** associés au premier côté du cadre de porte enserrant entre eux l'évidement en rainure **(14)** associé à l'autre côté du cadre de porte.

8. Porte de véhicule selon l'une des revendications **1** à **7**, caractérisée en ce que la partie frontale de cadre de porte **(3)** est formée d'une découpe en longueur d'un profilé extrudé coupé de manière appropriée.

9. Porte de véhicule selon l'une des revendications **1** à **8**, caractérisée en ce que les moyens de verrouillage **(24)** orientés transversalement à la direction d'enfichage ou à l'extension longitudinale des évidements en rainure sont formés par des évidements ou renfoncements **(23)** et des boutons de verrouillage **(24)** placés, en alternance, dans des évidements en rainure dans la partie frontale de cadre de porte **(3)** et dans les parties de raccordement des parties devant être assemblées à la partie de cadre de porte.

10. Porte de véhicule selon l'une des revendications **1** à **9**, caractérisée en ce que des moitiés de charnières **(10)** de charnières de porte se raccordant à la partie frontale de cadre de porte **(3)** sont munies de parties de raccordement **(21)**, à section transversale, en forme de tête de marteau, orientées perpendiculairement au plan de leur lame de charnière **(20).**

11. Porte de véhicule selon la revendication **1**, caractérisée en ce que les raccords enfichables de la partie frontale de cadre de porte **(3)** par des consoles **(15)** ou analogues, en forme de tenons, agencées ou formées en saillie transversalement à leur plan et les parties **(5-8)** se raccordant, sont formées par des profilés creux.

12. Porte de véhicule selon la revendication **11**, caractérisée en ce que les moyens de verrouillage **(26)** transversaux à la direction d'enfichage, sont formés, pour une autre partie devant être raccordée à l'un des raccords enfichables de la partie frontale de cadre de porte **(3)**, par des évidements ou renfoncements **(25)** et des boutons de verrouillage **(26)** placés en alternance dans ceux-ci et dans les consoles **(15)** en forme de tenons.

13. Porte de véhicule selon la revendication **11** ou **12**, caractérisée en ce que les évidements ou renfoncements sont formés dans l'autre partie à assembler avec l'un des raccords enfichables de la partie frontale de cadre de porte.

14. Porte de véhicule selon l'une des revendications **11** à **13**, caractérisée en ce que les moyens de verrouillage **(26)**, orientés transversalement à la direction d'enfichage, sont formés, pour une autre partie devant être assemblée à l'un des raccords enfichables en forme de tenon de la partie frontale de cadre de porte **(3)** par au moins une entaille ou rainure **(29)** formée de manière au moins partiellement périphérique dans le raccord enfichable en forme de tenon et par une déformation ou un matriçage devant être ménagé en coïncidence dans la partie à raccorder.

15. Porte de véhicule selon l'une des revendications **11** à **14**, caractérisée en ce que la partie frontale de cadre de porte **(3)** présente, dans au moins l'une de ses surfaces périphériques **(28)**, au moins un raccord enfichable formé par un évidement en rainure **(29)** pour des parties d'habillage de la porte.

16. Porte de véhicule selon la revendication **1**, caractérisée par une configuration en pièce moulée au cours du façonnage interne haute pression à partir d'une découpe de matière en profilé d'un matériau de construction léger avec des parties de charnière **(10)** rapportées de manière inamovible au cours du façonnage interne haute pression.

17. Porte de véhicule selon l'une des revendications **1** à **16**, caractérisée en ce que la partie frontale de cadre de porte **(3)** présente une surface extérieure lisse et un nervurage **(41)** orienté longitudinalement et tourné vers l'intérieur du cadre de porte, ainsi qu'au moins un manchon de raccordement **(44)** placé à l'extrémité supérieure pour d'autres parties de cadre de porte, en particulier un support de gaine de fenêtre **(45)**.

18. Porte de véhicule selon la revendication **17**, caractérisée en ce que le nervurage **(41)** tourné vers le centre de la porte est muni de moyens pour fixer un lève-vitre **(40)** conformé en unité autonome.

19. Porte de véhicule selon l'une des revendications **1** à **18**, caractérisée en ce que la partie frontale de cadre de porte **(3)**, en plus d'un raccord enfichable **(44)** pour un support de gaine de fenêtre placé à l'extrémité supérieure et muni de moyens de verrouillage, présente à l'extrémité inférieure un autre manchon de raccordement **(47)** pour une autre partie de cadre **(48)** pour la porte.

20. Porte de véhicule selon l'une des revendications **1** à **19**, caractérisée en ce que la partie frontale de cadre de porte **(3)** est muni de moyens d'un seul tenant, au moins pour recevoir la partie côté porte d'une fermeture de porte, en particulier un boîtier de fixation **(46)**.

21. Porte de véhicule selon l'une des revendications **1** à **20**, caractérisée en ce que la partie frontale de cadre de porte **(3)** est munie d'un dispositif de raccordement séparé conformé en raccord enfichable verrouillable pour une protection latérale contre les chocs devant être placée dans le corps de porte, en particulier pour une protection latérale contre les chocs formée d'un support en matériau profilé **(9)**.

22. Porte de véhicule selon l'une des revendications **1** à **21**, caractérisée en ce que la partie frontale de cadre de porte **(3)** est muni en plus, sur sa surface **(4)** associée au côté frontal de la porte, de rainures de réception **(57)** pour fixer une section du joint de porte disposé, par ailleurs, de manière périphérique.

23. Porte de véhicule selon l'une des revendications **1** à **22**, caractérisée en ce que la partie frontale de cadre de porte **(3)** est munie, en plus, au niveau de son extrémité supérieure, de moyens de raccordement formés par des raccords enfichables verrouillables pour un cadre de fenêtre de porte **(48)** et, le cas échéant, un triangle réfléchissant **(49)**.
